# EUROPEAN PATENT SPECIFICATION

(11) **EP 3 616 888 B1**
(45) Date of publication and mention of the grant of the patent: **10.08.2022**
(21) Application number: 18791225.8
(22) Date of filing: 12.04.2018
(51) Int. Cl.: B29C 70/32, C08J 5/24, B29C 53/84, C08J 5/04, B29C 35/02, B29C 53/56, B29C 53/80

(54) **SHEET WINDING MOLDING METHOD**
FOLIENWICKELFORMVERFAHREN
PROCÉDÉ DE MOULAGE PAR ENROULEMENT DE FEUILLE

(30) Priority: 27.04.2017 JP 2017088322
(43) Date of publication of application: 04.03.2020
(73) Proprietor: DIC Corporation, Tokyo 174-8520 (JP)
(72) Inventor: SHINCHI Tomoaki, Takaishi-shi Osaka 592-0001 (JP); KAWANO Yasushi, Tokyo 103-8233 (JP); NONAKA Shinichi, Takaishi-shi Osaka 592-0001 (JP)
(74) Representative: Adam, Holger
(86) International application number: PCT/JP2018/015359
(87) International publication number: WO 2018/198795

(56) References cited:
- EP-A1- 1 191 253
- JP-A- H02 113 927
- JP-A- H02 113 927
- JP-A- 2002 355 893
- JP-A- 2004 099 814
- JP-A- 2004 099 814
- JP-A- 2008 143 029
- JP-A- 2010 260 344
- JP-A- 2016 098 322
- US-A1- 2009 236 091
- US-A1- 2010 025 412
- US-A1- 2010 260 955
- US-A1- 2016 280 871

## Description

### Technical Field

The present invention relates to a sheet winding molding method having excellent productivity.

### Background Art

A fiber-reinforced resin composite material, which is reinforced with a reinforcing fiber, such as a carbon fiber or a glass fiber, has excellent heat resistance and mechanical strength despite being lightweight, and has attracted attention due to such advantageous features, and the use of the fiber-reinforced resin composite material in various structure applications, such as bodies and other members for automobile and aircraft, is expanding. As a molding method for the fiber-reinforced resin composite material, for example, a method is employed in which, using an intermediate material called a prepreg, which is produced by impregnating a reinforcing fiber with a thermosetting resin, the prepreg is cured and molded by autoclave molding, press molding, or winding molding. Particularly, when obtaining a molded article in a cylindrical shape, winding molding is conducted.

It is generally necessary that the resin for use in a prepreg be a resin having both stability and curability by heating or the like, and hence, generally, as a resin for a prepreg, thermosetting resins, such as an epoxy resin composition, are widely used (see, for example, JP2015127386 A).

Document JPH02113927 discloses a sheet winding molding method according to the preamble of claim 1.

However, the prepreg using the epoxy resin composition has a problem in that it has stability but is cured slowly. Further, when winding molding is conducted for the prepreg using the epoxy resin, a problem is caused in that, when the prepreg is cured at a high temperature after winding, the viscosity is lowered, so that the arrangement of fibers in the prepreg is disordered due to relaxation of the residual tension caused by winding, leading to a poor strength.

Thus, there has been desired a molding method such that the method has excellent productivity, and that a molded article having excellent physical properties, such as excellent interlaminar shear strength, can be obtained by the method.

### Summary of Invention

### Technical Problem

A task to be achieved by the present invention is to provide a sheet winding molding method which is advantageous not only in that the method has excellent productivity, but also in that a molded article having excellent physical properties, such as excellent interlaminar shear strength, can be obtained by the method.

### Solution to Problem

The present inventors have found that a sheet winding molding method comprising winding a thermosetting prepreg around a substrate under specific conditions is advantageous not only in that the method has excellent productivity, but also in that a molded article having excellent physical properties, such as excellent interlaminar shear strength, can be obtained by the method, and the present invention has been completed.

Specifically, the present invention is directed to a sheet winding molding method including winding a thermosetting prepreg around a substrate while heating the thermosetting prepreg, wherein the time taken to form a next layer of the thermosetting prepreg on a layer of the wound thermosetting prepreg is shorter than the gel time of the prepreg at the temperature of the wound thermosetting prepreg. Advantageous Effects of Invention

The molded article obtained by the sheet winding molding method of the invention has excellent interlaminar shear strength and the like, and therefore can be advantageously used in members for automobiles, members for railway rolling stocks, members for aircrafts and aerospace vehicles, members for vessels, members for housing and related facilities, members for sports, members for light cars, members for construction and civil engineering, and housing for OA machines and the like . Description of Embodiments

The sheet winding molding method of the invention includes winding a thermosetting prepreg around a substrate while heating the thermosetting prepreg, wherein the time taken to form a next layer of the thermosetting prepreg on a layer of the wound thermosetting prepreg is shorter than the gel time of the prepreg at the temperature of the wound thermosetting prepreg.

In the molding method of the invention, a thermosetting prepreg having excellent curing properties is wound around a substrate while the thermosetting prepreg is heated, so that curing proceeds simultaneously with the winding, which can eliminate the need for a curing step after the winding and provide excellent productivity. Further, the arrangement of fibers in the prepreg is prevented from being disordered due to relaxation of the tension, which makes it possible to obtain a molded article having excellent interlaminar shear strength.

Further, the time taken to form a next layer of the thermosetting prepreg on a layer of the wound thermosetting prepreg (hereinafter, referred to simply as "prepreg lamination time") is shorter than the gel time of the wound thermosetting prepreg, and therefore a molded article having excellent adhesion between the layers and excellent interlaminar shear strength can be obtained.

The above-mentioned thermosetting prepreg contains a thermosetting resin composition and a reinforcing fiber. In view of further improving the curing properties and the interlaminar shear strength of the molded article obtained, the thermosetting resin composition preferably contains a radically polymerizable resin and a polymerization initiator.

Examples of the radically polymerizable resins include epoxy (meth)acrylate, urethane-modified epoxy (meth)acrylate, urethane (meth)acrylate, and an unsaturated polyester, but, in view of further improving the curing properties and the interlaminar shear strength of the molded article obtained, preferred is urethane-modified epoxy (meth)acrylate or urethane (meth)acrylate. These radically polymerizable resins can be used individually or in combination.

With respect to the above-mentioned urethane-modified epoxy (meth)acrylate, in view of further improving the workability and the interlaminar shear strength of the molded article obtained, preferred is an urethane-modified epoxy (meth)acrylate which is obtained by reacting an epoxy (meth) acrylate having an average hydroxyl group number of 1.8 to 2.6 per molecule and a polyisocyanate having an average isocyanate group number of 2 to 3 per molecule.

The epoxy (meth) acrylate can be obtained by reacting an epoxy resin and (meth)acrylic acid and/or (meth)acrylic anhydride with each other. As an example of a method of obtaining the epoxy (meth) acrylate having an average hydroxyl group number of 1.8 to 2.6 per molecule, there can be mentioned a method in which the average hydroxyl group number of the epoxy (meth)acrylate per molecule is controlled by appropriately setting the average epoxy group number and average hydroxyl group number of the epoxy resin and the molar number of (meth)acrylic acid and/or (meth)acrylic anhydride during the reaction.

Examples of the above-mentioned epoxy resins include bisphenol epoxy resins, such as a bisphenol A epoxy resin, a bisphenol F epoxy resin, a bisphenol fluorene epoxy resin, and a biscresol fluorene epoxy resin; novolak epoxy resins, such as a phenolic novolak epoxy resin and a cresol novolak epoxy resin; an oxazolidone-modified epoxy resin; glycidyl ethers of phenol, such as brominated epoxy resins of the above resin; glycidyl ethers of a polyhydric alcohol, such as dipropylene glycol diglycidyl ether, trimethylolpropane triglycidyl ether, diglycidyl ether of an alkylene oxide addition product of bisphenol A, and diglycidyl ether of hydrogenated bisphenol A; alicyclic epoxy resins, such as 3,4-epoxy-6-methylcyclohexylmethyl 3,4-epoxy-6-methylcyclohexanecarboxylate and 1-epoxyethyl-3,4-epoxycyclohexane; glycidyl esters, such as diglycidyl phthalate, diglycidyl tetrahydrophthalate, diglycidyl p-oxybenzoate, and dimer acid glycidyl ester; glycidylamines, such as tetraglycidyldiaminodiphenylmethane, tetraglycidyl-m-xylenediamine, triglycidyl-p-aminophenol, and N,N-diglycidylaniline; and heterocyclic epoxy resins, such as 1,3-diglycidyl-5,5-dimethylhydantoin and triglycidyl isocyanurate. Of these, from the viewpoint of obtaining a molded article having more excellent mechanical strength and heat resistance, a bisphenol epoxy resin, a novolak epoxy resin, or an oxazolidone-modified epoxy resin is more preferred, and further, from the viewpoint of obtaining a cured product having excellent balance between the interlaminar shear strength and the mechanical strength, a bisphenol epoxy resin or an oxazolidone-modified epoxy resin is more preferred. The epoxy equivalent of the epoxy resin is preferably 150 to 400 from the viewpoint of the heat resistance and curing properties. These epoxy resins can be used individually or in combination.

The above-mentioned reaction of an epoxy resin and (meth)acrylic acid is preferably conducted using an esterification catalyst at 60 to 140°C. Further, a polymerization inhibitor or the like can also be used.

With respect to the polyisocyanate used in the production of the above-mentioned urethane-modified epoxy (meth) acrylate, preferred is a polyisocyanate having an average isocyanate group number of 2 to 3 per molecule, but, for example, an aromatic polyisocyanate, such as diphenylmethane diisocyanate (of a 4,4'-form, a 2,4'-form, or a 2,2'-form, or a mixture thereof), modified diphenylmethane diisocyanate, e.g., a carbodiimide modification product, cyanurate modification product, biuret modification product, or urethane-imine modification product of diphenylmethane diisocyanate, or diphenylmethane diisocyanate modified with a polyol having a number average molecular weight of 1,000 or less, such as diethylene glycol or dipropylene glycol, tolylene diisocyanate, tolidine diisocyanate, polymethylene polyphenyl polyisocyanate, xylylene diisocyanate, 1,5-naphthalene diisocyanate, or tetramethylxylene diisocyanate; an alicyclic polyisocyanate, such as isophorone diisocyanate, hydrogenated diphenylmethane diisocyanate, hydrogenated xylylene diisocyanate, or norbornene diisocyanate; an aliphatic polyisocyanate, such as hexamethylene diisocyanate, a cyanurate modification product, biuret modification product, or adduct of hexamethylene diisocyanate, or dimer acid diisocyanate, or the like can be used. Further, these polyisocyanates can be used individually or in combination.

In the production of the urethane-modified epoxy (meth)acrylate, with respect to the molar ratio (NCO/OH) of the isocyanate group (NCO) of the polyisocyanate to the hydroxyl group (OH) of the epoxy (meth)acrylate, from the viewpoint of achieving more excellent balance between the workability (tackiness) and the fluidity of the resin due to an increase of the molecular weight by a chain extension reaction, the molar ratio (NCO/OH) is preferably in the range of 0.6 to 1.1, more preferably in the range of 0.7 to 1.0.

With respect to the urethane (meth)acrylate, from the viewpoint of obtaining a molded article having excellent workability and moldability and having excellent physical properties, such as excellent interlaminar shear strength and heat resistance, preferred is urethane (meth)acrylate which is a reaction product of a polyisocyanate compound produced from polymethylene polyphenyl polyisocyanate as an essential raw material and a compound having a hydroxyl group produced from a compound having a hydroxyl group and (a)an (meth)acryloyl group as an essential raw material.

The above-mentioned polymethylene polyphenyl polyisocyanate is represented by the following general formula (1) . 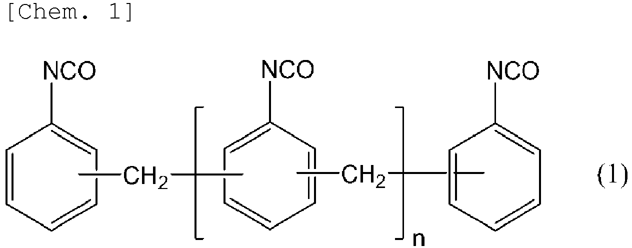 In the formula, n is an integer of 1 or more.

Examples of the compounds having a hydroxyl group and (a)an (meth)acryloyl group for the urethane (meth)acrylate include a hydroxyalkyl (meth)acrylate and epoxy (meth) acrylate. These compounds having a hydroxyl group and (a)an (meth)acryloyl group can be used individually or in combination.

The molar ratio (NCO/OH) of the isocyanate group (NCO) of the isocyanate compound to the hydroxyl group (OH) of the compound (a2) having a hydroxyl group, which compounds are raw materials of the urethane (meth)acrylate (A), is preferably 0.1 to 1.5, more preferably 0.3 to 1.2.

With respect to the polymerization initiator contained in the above-mentioned thermosetting resin composition, an organic peroxide is preferred, and examples of organic peroxides include diacyl peroxide compounds, peroxyester compounds, hydroperoxide compounds, ketone peroxide compounds, alkyl perester compounds, percarbonate compounds, and peroxyketals, and a polymerization initiator can be appropriately selected from these compounds according to the molding conditions. These polymerization initiators can be used individually or in combination.

Further, of these, preferred is a polymerization initiator having a temperature of 70 to 100°C at which a 10-hour half-life is obtained because the resultant prepreg has a long life at room temperature and further suffers curing due to heating in a short time. By using such a polymerization initiator, a molded article having excellent interlaminar shear strength can be obtained in a short time. Examples of the polymerization initiators include 1,6-bis(t-butylperoxycarbonyloxy)hexane, 1,1-bis(t-butylperoxy)cyclohexane, 1,1-bis(t-amylperoxy)cyclohexane, 1,1-bis(t-hexylperoxy)cyclohexane, t-butyl peroxydiethylacetate, t-butylperoxy isopropyl carbonate, t-amylperoxy isopropyl carbonate, t-hexylperoxy isopropyl carbonate, di-tert-butyl peroxyhexahydroterephthalate, t-amyl peroxytrimethylhexanoate, and t-hexyl peroxy-2-ethylhexanoate.

Further, in view of further improving the curing properties and the interlaminar shear strength of the molded article obtained, the thermosetting resin composition preferably contains an ethylenically unsaturated monomer.

Examples of the ethylenically unsaturated monomers include styrene compounds, such as styrene, methylstyrene, halogenated styrene, and divinylbenzene; monofunctional (meth)acrylate compounds, such as methyl (meth)acrylate, ethyl (meth)acrylate, propyl (meth)acrylate, butyl (meth)acrylate, 2-ethylhexyl (meth)acrylate, cyclohexyl (meth)acrylate, isobornyl (meth)acrylate, benzyl (meth)acrylate, methylbenzyl (meth)acrylate, phenoxyethyl (meth)acrylate, methylphenoxyethyl (meth)acrylate, morpholine (meth)acrylate, phenylphenoxyethyl acrylate, phenylbenzyl (meth)acrylate, phenyl methacrylate, dicyclopentenyl (meth)acrylate, dicyclopentenyloxyethyl (meth)acrylate, and dicyclopentanyl methacrylate; hydroxyl group-containing (meth)acrylate compounds, such as hydroxyethyl (meth)acrylate, hydroxypropyl (meth)acrylate, and hydroxybutyl (meth)acrylate; and di(meth)acrylate compounds, such as ethylene glycol di(meth)acrylate, propylene glycol di(meth)acrylate, 1,4-butanediol di(meth) acrylate, 1,6-hexanediol di(meth) acrylate, bisphenol di(meth)acrylate, and 1,4-cyclohexanedimethanol di(meth)acrylate. These can be used individually or in combination.

Of these, from the viewpoint of an odor in the working environment and handling of a hazardous material and the mechanical strength and heat resistance of the molded article obtained, preferred are monofunctional (meth) acrylates having a molecular weight of 150 to 250, more preferred are phenoxyethyl (meth)acrylate, methylphenoxyethyl (meth)acrylate, benzyl (meth)acrylate, and methylbenzyl (meth)acrylate, and further preferred are phenoxyethyl (meth)acrylate and benzyl (meth)acrylate.

Examples of the reinforcing fibers include a carbon fiber, a glass fiber, a silicon carbide fiber, an alumina fiber, a boron fiber, a metallic fiber, and organic fibers, such as an aramid fiber, a vinylon fiber, and a Tetoron fiber, but, in view of obtaining a molded article having higher strength and higher elasticity, preferred is a carbon fiber or a glass fiber, and more preferred is a carbon fiber. These reinforcing fibers can be used individually or in combination.

With respect to the thermosetting prepreg, a unidirectional material obtained by unidirectionally arranging reinforcing fiber tow or a material obtained by laminating the unidirectional material on one another, knitted fabric, nonwoven fabric formed from a short cut reinforcing fiber, or the like can be used. Examples of lamination constructions of the unidirectional prepreg include 0°, (0°, 90°), (+45°/0°/-45°/90°), and (+60°/0°/-60°).

Further, the thermosetting prepreg preferably has a thickness in the range of 0.02 to 1 mm, more preferably 0.05 to 0.5 mm.

The thermosetting prepreg preferably has a width in the range of 100 to 2,000 mm, more preferably in the range of 300 to 1,500 mm.

According to the invention and in view of further improving the productivity and the interlaminar shear strength of the molded article obtained, the gel time of the thermosetting prepreg at 150°C is in the range of 15 to 60 seconds.

In the invention, the gel time and cure time of the prepreg are measured by means of CURELASTOMETER 7 TYPE P (manufactured by JSR Trading Co., Ltd.).

It is important that the speed of winding the thermosetting prepreg around a substrate is controlled so that the prepreg lamination time is shorter than the gel time of the thermosetting prepreg, but, in view of further improving the productivity and the interlaminar shear strength of the molded article obtained, the winding speed is preferably in the range of 8 to 850 mm/second, more preferably in the range of 15 to 400 mm/second.

In view of further improving the productivity and the interlaminar shear strength of the molded article obtained, the prepreg lamination time is preferably in the range of 1 to 90 seconds, more preferably in the range of 1 to 60 seconds.

In view of further improving the productivity and the interlaminar shear strength of the molded article obtained, the temperature of the wound thermosetting prepreg is preferably in the range of 80 to 160°C, more preferably in the range of 110 to 160°C, further preferably in the range of 120 to 150°C.

The temperature of the thermosetting prepreg in the invention is a temperature as measured with respect to the surface of the prepreg by means of a thermocouple-type thermometer.

With respect to the heating method for the thermosetting prepreg, there is no particular limitation, but, from the viewpoint of facilitating heating of the thermosetting prepreg, preferred are contacting the prepreg with a heated substrate, contacting the prepreg with a heating roll, contacting the prepreg with a heating plate, and heating the prepreg using an infrared heater, microwaves, or a halogen heater.

The substrate around which the thermosetting prepreg is wound is preferably a substrate in a cylindrical shape, such as a tank or a pipe.

The circumferential length of the substrate is preferably in the range of 30 to 3,000 mm in view of more easily controlling the winding speed.

In view of further improving the interlaminar shear strength of the molded article obtained by the sheet winding molding method of the invention, it is preferred that, after winding, heating is continued until the cure time of the thermosetting prepreg has elapsed.

The molded article obtained by the sheet winding molding method of the invention has excellent interlaminar shear strength and the like, and therefore can be advantageously used in members for automobiles, members for railway rolling stocks, members for aircrafts and aerospace vehicles, members for vessels, members for housing and related facilities, members for sports, members for light cars, members for construction and civil engineering, and housing for OA machines and the like . Examples

Hereinbelow, the present invention will be described in more detail with reference to the following specific Examples.

### (Production Example 1: Preparation of a thermosetting prepreg (1))

Into a 1 L flask equipped with a thermometer, a nitrogen and air introducing pipe, and a stirrer were charged 380 parts by mass of an epoxy resin ("EPICLON 850-S", manufactured by DIC Corporation; bisphenol A epoxy resin; epoxy equivalent: 190), 170 parts by mass of methacrylic acid, and 0.16 parts by mass of t-butylhydroquinone, and the temperature in the flask was increased to 90°C while allowing a 1:1 mixed gas of nitrogen and air to flow into the flask. 1.1 parts by mass of trisdimethylaminophenol was added to the resultant mixture, and the temperature was increased to 110°C and a reaction was conducted for 10 hours, and, after checking that the acid value was 4 or less, the reaction was terminated. The resultant reaction mixture was cooled to about 60°C, and then taken out from the reaction vessel, obtaining epoxy methacrylate (1).

Into 100 parts by mass of a resin liquid, which had been preliminarily obtained by mixing together 75 parts by mass of the above-obtained epoxy methacrylate (1) and 25 parts by mass of phenoxyethyl methacrylate, were mixed 0.02 parts by mass of parabenzoquinone and 1 part by mass of a polymerization initiator ("Trigonox 27", manufactured by Kayaku Akzo Corporation; organic peroxide), and then 28 parts by mass of 4,4'-diphenylmethane diisocyanate was mixed with the resultant mixture to obtain a thermosetting resin composition (1) .

A carbon fiber ("TC-36P", manufactured by FORMOSA PLASTIC CORPORATION) was impregnated with the above-obtained thermosetting resin composition (1) using a prepreg producing apparatus so that the volume content of the carbon fiber in the resultant prepreg became 60% to obtain a thermosetting prepreg (1). The obtained thermosetting prepreg (1) had a thickness of 0.09 mm and a width of 300 mm. Further, the gel time at 150°C was 25 seconds, the gel time at 146°C was 29 seconds, and the cure time at 146°C was 49 seconds.

### (Production Example 2: Preparation of a thermosetting prepreg (2))

100 parts by mass of a mixture of polymethylene polyphenyl polyisocyanate and diphenylmethane diisocyanate ("Millionate MR-200", manufactured by Tosoh Corp.; polymethylene polyphenyl polyisocyanate content: 56%; hereinafter, referred to simply as "polymeric MDI mixture (1)"), 75.5 parts by mass of hydroxyethyl methacrylate, 15 parts by mass of pentaerythritol polyoxyethylene ether ("PNT-40", manufactured by Nippon Nyukazai Co., Ltd.), 21 parts by mass of phenoxyethyl methacrylate, and 2 parts by mass of a polymerization initiator ("Trigonox 27", manufactured by Kayaku Akzo Corporation; organic peroxide) were mixed with one another to obtain a thermosetting resin composition (2).

A carbon fiber ("TC-36P", manufactured by FORMOSA PLASTIC CORPORATION) was impregnated with the above-obtained thermosetting resin composition (2) using a prepreg producing apparatus so that the volume content of the carbon fiber in the resultant prepreg became 60% to obtain a thermosetting prepreg (2). The obtained thermosetting prepreg (2) had a thickness of 0.09 mm and a width of 300 mm. Further, the gel time at 150°C was 19 seconds, the gel time at 146°C was 21 seconds, the gel time at 120°C was 70 seconds, the gel time at 116°C was 76 seconds, the cure time at 146°C was 43 seconds, and the cure time at 116°C was 105 seconds.

### (Example 1)

The thermosetting prepreg (1) having a width of 300 mm obtained in Production Example 1 was wound 30 times around a pipe having a diameter of 100 mm and a width of 500 mm at a temperature of 150°C at a speed of 22 mm/second (prepreg lamination time: 14 seconds) with the same wrapping width, while heating both sides of the prepreg at 150°C using an infrared heater immediately before wrapping the prepreg around the substrate, and then heating was continued for 90 seconds to obtain a molded article (1). The temperature of the wound prepreg was 146 to 150°C. The obtained molded article (1) had an interlaminar shear strength of 37 MPa.

### (Example 2)

The thermosetting prepreg (1) having a width of 300 mm obtained in Production Example 1 was wound 30 times around a pipe having a diameter of 100 mm and a width of 500 mm at a temperature of 150°C at a speed of 67 mm/second (prepreg lamination time: 5 seconds) with the same wrapping width, while heating both sides of the prepreg at 150°C using an infrared heater immediately before wrapping the prepreg around the substrate, and then heating was continued for 90 seconds to obtain a molded article (2). The temperature of the wound prepreg was 146 to 150°C. The obtained molded article (2) had an interlaminar shear strength of 52 MPa.

### (Example 3)

The thermosetting prepreg (1) having a width of 300 mm obtained in Production Example 1 was wound 30 times around a pipe having a diameter of 100 mm and a width of 500 mm at a temperature of 150°C at a speed of 125 mm/second (prepreg lamination time: 3 seconds) with the same wrapping width, while heating both sides of the prepreg at 150°C using an infrared heater immediately before wrapping the prepreg around the substrate, and then heating was continued for 90 seconds to obtain a molded article (3). The temperature of the wound prepreg was 146 to 150°C. The obtained molded article (3) had an interlaminar shear strength of 42 MPa.

### (Example 4)

The thermosetting prepreg (2) having a width of 300 mm obtained in Production Example 2 was wound 30 times around a pipe having a diameter of 100 mm and a width of 500 mm at a temperature of 150°C at a speed of 125 mm/second (prepreg lamination time: 3 seconds) with the same wrapping width, while heating both sides of the prepreg at 150°C using an infrared heater immediately before wrapping the prepreg around the substrate, and then heating was continued for 90 seconds to obtain a molded article (4). The temperature of the wound prepreg was 146 to 150°C. The obtained molded article (4) had an interlaminar shear strength of 32 MPa.

### (Example 5)

The thermosetting prepreg (2) having a width of 300 mm obtained in Production Example 2 was wound 30 times around a pipe having a diameter of 100 mm and a width of 500 mm at a temperature of 120°C at a speed of 67 mm/second (prepreg lamination time: 5 seconds) with the same wrapping width, while heating both sides of the prepreg at 120°C using an infrared heater immediately before wrapping the prepreg around the substrate, and then heating was continued for 120 seconds to obtain a molded article (5). The temperature of the wound prepreg was 116 to 120°C. The obtained molded article (5) had an interlaminar shear strength of 38 MPa.

### (Comparative Example 1)

The thermosetting prepreg (1) having a width of 300 mm obtained in Production Example 1 was wound 30 times around a pipe having a diameter of 100 mm and a width of 500 mm at a temperature of 150°C at a speed of 9 mm/second (prepreg lamination time: 35 seconds) with the same wrapping width, while heating both sides of the prepreg at 150°C using an infrared heater immediately before wrapping the prepreg around the substrate, and then heating was continued for 90 seconds to obtain a molded article (R1). The temperature of the wound prepreg was 146 to 150°C. The obtained molded article (R1) had an interlaminar shear strength of 11 MPa.

### (Comparative Example 2)

The thermosetting prepreg (1) having a width of 300 mm obtained in Production Example 1 was wound 30 times around a pipe having a diameter of 100 mm and a width of 500 mm at a temperature of 150°C at a speed of 2 mm/second (prepreg lamination time: 157 seconds) with the same wrapping width, while heating both sides of the prepreg at 150°C using an infrared heater immediately before wrapping the prepreg around the substrate, and then heating was continued for 90 seconds to obtain a molded article (R2). The temperature of the wound prepreg was 146 to 150°C. The obtained molded article (R2) had an interlaminar shear strength of 2 MPa.

### [Evaluation of an interlaminar shear strength of a molded article]

From the above-obtained molded article (1), a test specimen having a width of 10 mm and a length of 20 mm was cut out, and, with respect to the test specimen, an interlaminar shear strength was measured in accordance with JIS K7078, and evaluated according to the following criteria.
⊚: 50 MPa or more
○: 15 to less than 50 MPa
△: 10 to less than 15 MPa
×: Less than 10 MPa

The results of the evaluation of the above-obtained molded articles (1) to (5) and molded articles (R1) and (R2) are shown in Table 1.

**[Table 1]**

| Table 1 | | Example 1 | Example 2 | Example 3 | Example 4 | Example 5 | Comparative Example 1 | Comparative Example 2 |
|---|---|---|---|---|---|---|---|---|
| Molded article | | (1) | (2) | (3) | (4) | (5) | (R1) | (R2) |
| Thermosetting prepreg | | (1) | (1) | (1) | (2) | (2) | (1) | (1) |
| Thermosetting prepreg lamination time | | 14 sec | 5 sec | 3 sec | 3 sec | 5 sec | 35 sec | 157 sec |
| Gel time of thermosetting prepreg | 150°C | 25 sec | 25 sec | 25 sec | 19 sec | 19 sec | 25 sec | 25 sec |
| | 146°C | 29 sec | 29 sec | 29 sec | 21 sec | 21 sec | 29 sec | 29 sec |
| | 120°C | | | | 70 sec | 70 sec | | |
| | 116°C | | | | 76 sec | 76 sec | | |
| Temperature of wound thermosetting prepreg | | 146-150°C | 146-150°C | 146-150°C | 146-150°C | 116-120°C | 146-150°C | 146-150°C |
| Interlaminar shear strength | | 37 MPa ○ | 52 MPa ⊚ | 42 MPa ○ | 32 MPa ○ | 38 MPa ○ | 11 MPa △ | 2 MPa × |

It was found that the molded articles obtained by the sheet winding molding method of the invention in Examples 1 to 5 had excellent interlaminar shear strength.

In contrast, with respect to Comparative Examples 1 and 2 which are examples in which the time taken to form the next layer of the thermosetting prepreg on the wound thermosetting prepreg layer is longer than the gel time of the prepreg at the temperature of the wound thermosetting prepreg, it was found that the molded articles had poor interlaminar shear strength.

## Claims

1. A sheet winding molding method comprising winding a thermosetting prepreg around a substrate while heating the thermosetting prepreg, **characterised in that**
the time taken to form a next layer of the thermosetting prepreg on a layer of the wound thermosetting prepreg is shorter than the gel time of the prepreg at the temperature of the wound thermosetting prepreg, wherein the gel time of the thermosetting prepreg at 150°C is in the range of 15 to 60 seconds.

2. The sheet winding molding method according to claim 1, **characterised in that** the temperature of the wound thermosetting prepreg is in the range of 80 to 160°C.

3. The sheet winding molding method according to claim 1 or 2, **characterised in that** the thermosetting prepreg contains a radically polymerizable resin.

## Patentansprüche

1. Folienwickelformverfahren, bei dem ein wärmehärtendes Prepreg um ein Substrat gewickelt wird, während das wärmehärtende Prepreg erhitzt wird, **dadurch gekennzeichnet, dass**
die Zeit, die benötigt wird, um eine nächste Schicht des wärmehärtenden Prepregs auf einer Schicht des gewickelten wärmehärtenden Prepregs zu bilden, kürzer ist als die Gelzeit des Prepregs bei der Temperatur des gewickelten wärmehärtenden Prepregs, wobei die Gelzeit des wärmehärtenden Prepregs bei 150°C im Bereich von 15 bis 60 Sekunden liegt.

2. Folienwickelformverfahren nach Anspruch 1, **dadurch gekennzeichnet, dass** die Temperatur des gewickelten wärmehärtenden Prepregs im Bereich von 80 bis 160°C liegt.

3. Folienwickelformverfahren nach Anspruch 1 oder 2, **dadurch gekennzeichnet, dass** das wärmehärtende Prepreg ein radikalisch polymerisierbares Harz enthält.

## Revendications

1. Procédé de moulage par enroulement de feuilles comprenant l'enroulement d'un préimprégné thermodurcissable autour d'un substrat tout en chauffant le préimprégné thermodurcissable, **caractérisé en ce que**
le temps nécessaire pour former une couche suivante du préimprégné thermodurcissable sur une couche du préimprégné thermodurcissable enroulé est plus court que le temps de gel du préimprégné à la température du préimprégné thermodurcissable enroulé, dans lequel le temps de gel du préimprégné thermodurcissable à 150°C est dans la gamme de 15 à 60 secondes.

2. Procédé de moulage par enroulement de feuilles selon la revendication 1, **caractérisé en ce que** la température du préimprégné thermodurcissable enroulé est dans la gamme de 80 à 160° C.

3. Procédé de moulage par enroulement de feuilles selon la revendication 1 ou 2, **caractérisé en ce que** le préimprégné thermodurcissable contient une résine polymérisable par voie radicalaire.
